# EUROPEAN PATENT APPLICATION

(11) **EP 2 040 472 A1**
(43) Date of publication of application: **25.03.2009**
(21) Application number: 07744037.8
(22) Date of filing: 24.05.2007
(51) Int. Cl.: H04N 7/173, H05B 37/02

(54) **DATA TRANSMITTING DEVICE, DATA TRANSMITTING METHOD, AUDIO-VISUAL ENVIRONMENT CONTROL DEVICE, AUDIO-VISUAL ENVIRONMENT CONTROL SYSTEM, AND AUDIO-VISUAL ENVIRONMENT CONTROL METHOD**

(30) Priority: 13.06.2006 JP 2006162955
(71) Applicant: Sharp Kabushiki Kaisha, Osaka-shi, Osaka 545-8522 (JP)
(72) Inventor: IWANAMI, Takuya, Chiba-shi, Chiba 266-0011 (JP); YOSHII, Takashi, Chiba-shi, Chiba 266-0001 (JP); YOSHIDA, Yasuhiro, Nara 631-0837 (JP)
(74) Representative: Müller - Hoffmann & Partner
(86) International application number: PCT/JP2007/060603
(87) International publication number: WO 2007/145064

(57) **Abstract**

An audio-visual environment control system is provided for realizing control of an optimum audio-visual environment illumination in response to an atmosphere of a shot scene and a scene setting intended by an image creator. An image transmitting apparatus 10 is comprised of a data multiplexing portion 1 for multiplexing image data (V) and illumination control type information (C) indicative of a control type of the audio-visual environment illumination at the time of displaying each frames in the image data (V), and a transmitting portion 2 for modulating and transmitting the image data multiplexed with the illumination control type information (C).

## Description

### TECHNICAL FIELD

The present invention relates to a data transmitting device, a data transmitting method, an audio-visual environment control device, an audio-visual environment control system, and an audio-visual environment control method capable of controlling illumination light around an image display device adaptively to the atmosphere and the situation setting of a shot scene of an image when displaying the image on the image display device.

### BACKGROUND OF THE INVENTION

For example, when an image is displayed on an image display device such as a television receiver or when an image is projected and displayed with the use of a projector device, a technology is known that adjusts the surrounding illumination light in accordance with the displayed image to adds audio-visual enhancement effect such as enhancing the feeling of being at a live performance, etc.

For example, Japanese Laid-Open Patent Publication No. 2-158094 discloses a light-color variable illuminating apparatus that calculates a mixed light illuminance ratio of three primary colors of a light source for each frame from color signals (RGB) and a luminance signal (Y) of a color-television display image to perform light control by linking with the image. This light-color variable illuminating apparatus extracts the color signals (RGB) and the luminance signal (Y) from the color-television display image, calculates a proper light control illuminance ratio of trichromatic light (red light, green light, and blue light) used for the light source from the color signals and the luminance signal, determines the illuminance of the trichromatic light in accordance with the illuminance ratio, and mixes and outputs the trichromatic light as the illuminating light.

For example, Japanese Laid-Open Patent Publication No. 2-253503 discloses an image staging illuminating apparatus that divides a television image into a plurality of portions and that detects an average hue of the corresponding divided portions to perform the illumination control around the divided portions. This image staging illuminating apparatus includes an illuminating means that illuminates the periphery of the disposition location of the color television; an image displayed on a color television is divided into a plurality of portions; the average hue is detected for the divided portions of the image corresponding to a portion illuminated by the illuminating means; and the illuminating means is controlled based on the detected hue.

For example, in a method disclosed in Japanese Laid-Open Patent Publication No. 3-184203, instead of simply obtaining the average chromaticity and the average luminance of an entire screen of an image display device, it is considered that a remaining portion acquired by removing pixels of skin-colored portions such as human faces is a background part in an image shown on the screen of the image display device; only the RGB signals and luminance signal of the pixels of the background part are extracted to obtain the average chromaticity and the average luminance; and the illumination is controlled such that the chromaticity and the luminance of a wall behind the image display device becomes identical with the average chromaticity and the average luminance of the entire screen or the background part other than the human skin color.

### DISCLOSURE OF THE INVENTION

### PROBLEMS TO BE SOLVED BY THE INVENTION

Normally, a scene of image is created as a sequence of image based on a series of scene settings in accordance with the intention of image producers (such as a scenario writer and a director), for example. Therefore, to enhance the feeling of being at a live performance and atmosphere at the time of viewing image, it is desirable to emit illumination light into an audio-visual space in accordance with a scene situation of the displayed image.

However, in the above conventional technologies, the state of illumination light is varied depending on frame-by-frame changes in the luminance and the hue of image signals and, especially, in such a case that the degrees of changes in the luminance and the hue between frames are high, the illumination light is roughly varied and it is problematic that a viewer feels discomfort due to flickers. During display of one scene having no change in the situation setting, varying the illumination light depending on the frame-by-frame changes in the luminance and the hue spoils the atmosphere of the scene by contraries and is not desirable.

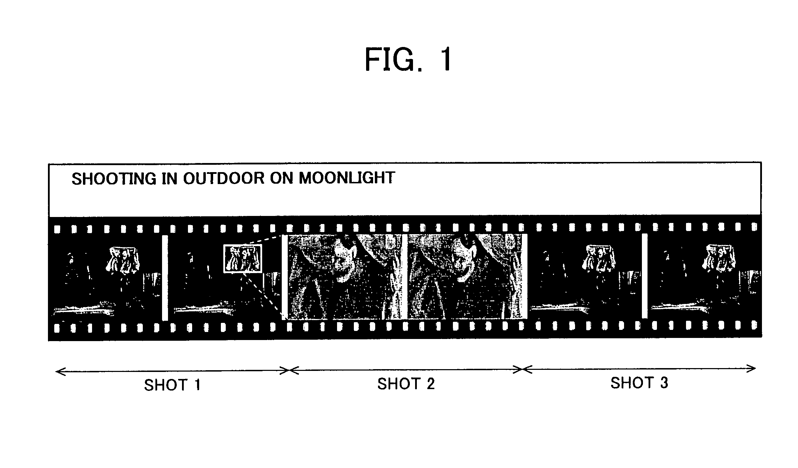

Fig. 1 is a view for explaining an example of the problem of the illumination variation of the conventional technology. In the example shown in Fig. 1, a scene is created in an image shot with the situation setting that is an outdoor location on a moonlight night. This scene is made up of three shots (shot 1, shot 2, and shot 3) with different camera works. In the shot 1, a camera shoots a target that is a ghost in wide-angle shot. When switching to the shot 2, the ghost is shot in close-up. In the shot 3, the camera position is returned to that of the shot 1. These shots are intentionally configured as a sequence of scene having single continuous atmosphere although the camera works are different.

In such a case, since relatively dark images on the moonlight night are continued in the shot 1, if the illumination light is controlled in accordance with the luminance and chromaticity of the frames of these images, the illumination light becomes relatively dark. When the shot 1 is switched to the shot 2, the ghost shot in close-up generates relatively bright images. If the illumination light is controlled for each frame by the conventional technologies, when the shots are switched, the control of the illumination light is considerably changed and the bright illumination light is generated. When switching to the shot 3, the illumination light returns to the dark light as in the case of the shot 1.

That is, if the illumination light becomes dark and bright in a sequence of scene with single continuous situation (atmosphere), the atmosphere of the scene is spoiled by contraries and a viewer feels unpleasant.

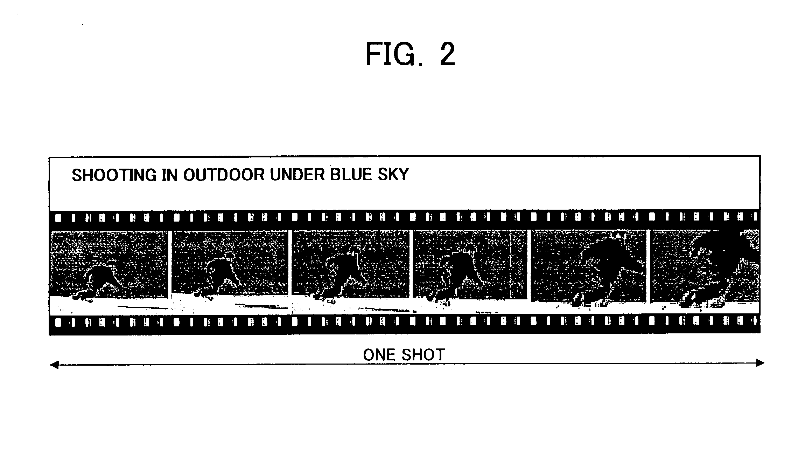

Fig. 2 is a view for explaining another example of the problem due to the variation of the illumination in a scene. In the example shown in Fig. 2, a scene is created in an image shot with the situation setting that is an outdoor location in the daytime under the blue sky. This scene consists of images acquired through continuous camera work without switching the camera. In this example, an image of a skier sliding down from above the camera to the vicinity of the camera is shot. The skier is dressed in red clothes and the sky is blue.

In the image of this scene, a blue sky area in the background is large in initial frames and the area of red clothes of the skier gradually increases as the skier slides down and approaches the camera. As the image of the scene progresses, the rate of color making up the frames is changed.

In such a case, if the illumination light is controlled using the chromaticity and luminance of each frame, the illumination light is changed from bluish light to reddish light. The color of the illumination light is changed in a sequence of scene with single continuous situation (atmosphere), and the atmosphere of the scene is spoiled by contraries and a viewer feels unpleasant.

As described above, it is desirable to retain substantially constant audio-visual environment illumination light in the same scene rather than switching the audio-visual environment illumination light for each frame depending on image feature quantities of frames.

Since shots are frequently changed in a short period of time during periods of opening (synopsis), preview, and commercial messages (CM) of dramas, movies, and music programs, if the illumination light is varied depending on changes in the luminance and the hue of the image signals for each frame as in the conventional technologies, the illumination light is roughly varied and it may be problematic that a viewer feels unpleasant.

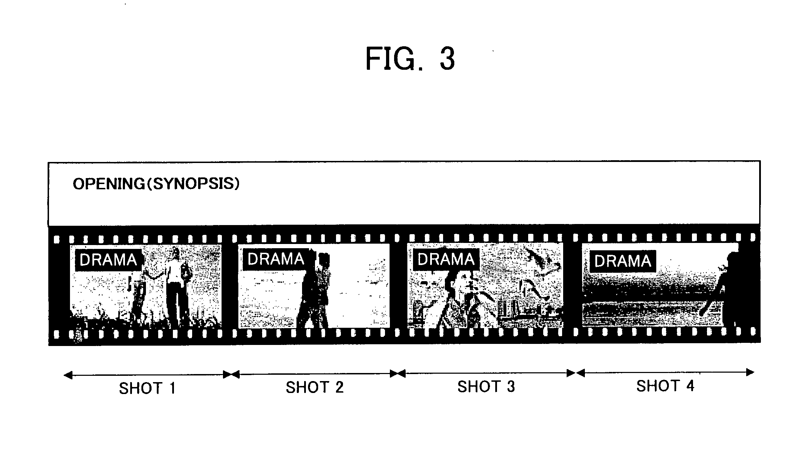

Fig. 3 is a view for explaining an example of the problem due to the variation of the illumination when displaying opening (synopsis). The example shown in Fig. 3 is a summarized image including shots (shot 1, shot 2, shot 3, and shot 4) especially important for the story of a drama program switched at short intervals (several seconds) and the shot 1, the shot 2, the shot 3, and the shot 4 are images shot with situation settings of an outdoor location in the daytime under the blue sky, an outdoor location in the early morning under the blue sky, an outdoor location in the daytime under the cloudy sky, and an outdoor location in the twilight under the clear sky, respectively.

That is, the image feature quantities of frames making up the images are different in each shot, and if the illumination light is controlled with the use of the chromaticity and the luminance of the frames as in the above conventional technologies, the illumination light is frequently varied at short intervals in synchronization with the switching of the shots, spoiling the atmosphere of the audio-visual environment by contraries and making a viewer unpleasant.

When an image with a plurality of shots varied frequently at short intervals is displayed, it is desirable to emit the constant illumination light such as white light with a predetermined intensity into the audio-visual environment space rather than switching the audio-visual environment illumination light for each frame depending on image feature quantities of frames.

Some television programs include image inserted for a short period of time between scenes, such as eye-catch (e.g., program credits inserted before or after CM and excerpts or telops of content to be picked up in the next part of a variety show). In such a case, if the illumination light is varied depending on changes in the luminance and the hue of the image signals for each frame as in the above conventional technologies, the illumination light is varied depending on short-time images inserted between scenes and it may be problematic that a viewer feels unpleasant.

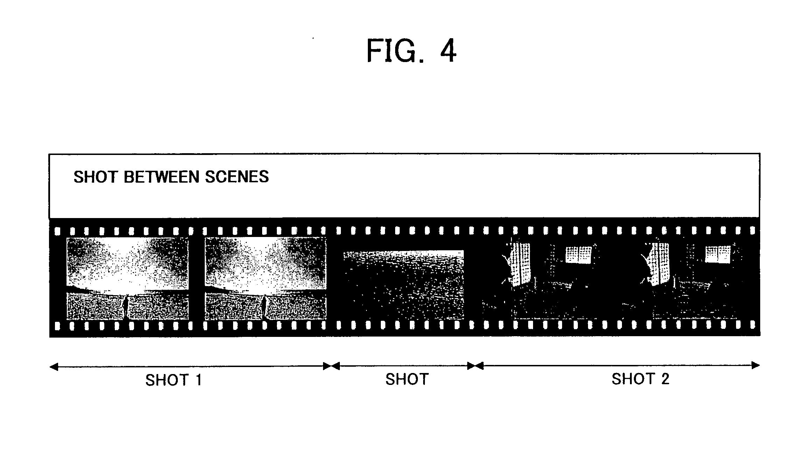

Fig. 4 is a view for explaining an example of the problem due to the variation of the illumination when displaying an image with a short-time shot image inserted between scenes. The example shown in Fig. 4 is an image with a shot of a lake surface at night inserted for a short period of time between a scene 1 having the situation setting of an outdoor location in the daytime under the blue sky and a scene 2 having the situation setting of an indoor location.

In such a case, if the illumination light is controlled with the use of the chromaticity and the luminance of the frames as in the above conventional technologies, after the bright illumination light is significantly switched to the dark illumination light in accordance with the change from the scene 1 to the shot, the dark illumination light is switched again to the bright illumination light in accordance with the change to the scene 2 at a short time, spoiling the atmosphere of the audio-visual environment by contraries and making a viewer unpleasant.

When an image is displayed with a short-time shot inserted between scenes, it may be desirable to maintain and emit the audio-visual environment illumination light corresponding to the image feature quantity of the last scene directly into the audio-visual environment space or to emit the constant illumination light such as white light with a predetermined intensity into the audio-visual environment space rather than switching the audio-visual environment illumination light depending on image feature quantities of the frames making up the shot.

For example, scenes subjected to special image processes may be inserted as in the case of recollection scenes of drama and movie programs and, in such a case, since the illumination light is varied depending on changes in the luminance and the hue of the image signals for each frame with special image effects added, it may be problematic that a viewer feels unpleasant.

When an image subjected to special image processes is displayed, it may be desirable to maintain and emit the audio-visual environment illumination light corresponding to the image feature quantity of the last scene directly into the audio-visual environment space or to emit the constant illumination light such as white light with a predetermined intensity into the audio-visual environment space rather than switching the audio-visual environment illumination light depending on image feature quantities of frames.

For example, scenes of competitions in sport programs or scenes recorded in studios for news/report and information/tabloid show programs make up images shot under the constant illumination of sport venues or recording studios in general. However, if the illumination light is varied depending on changes in the luminance and the hue of the image signals for each frame as in the above conventional technologies, since the illumination light of inappropriate color is emitted in the vicinity due to the influence of background artificial materials, faces and clothes of people, etc. , included in the image signals, the atmosphere of the scene is spoiled by contraries and a viewer may feel unpleasant.

When an image shot under the constant white illumination is displayed, it may be desirable to emit the constant illumination light such as white light with a predetermined intensity into the audio-visual environment space or maintain and emit the audio-visual environment illumination light corresponding to the image feature quantity of the frame including the illumination of athletic fields or studios in the wide shot directly into the audio-visual environment space rather than switching the audio-visual environment illumination light depending on image feature quantities of frames.

The present invention was conceived in view of the above problems and it is therefore an object of the present invention to provide a data transmitting device, a data transmitting method, an audio-visual environment control device, an audio-visual environment control system, and an audio-visual environment control method capable of suitably controlling the timing of switching illumination light of an audio-visual environment to implement the optimum illumination control in the audio-visual environment.

It is another object of the present invention to provide a data transmitting device, a data transmitting method, an audio-visual environment control device, an audio-visual environment control system, and an audio-visual environment control method capable of performing suitable switching control between the illumination light corresponding to a feature quantity of image data and the predefined illumination light determined in advance to implement the optimum illumination control in the audio-visual environment.

### MEANS FOR SOLVING THE PROBLEMS

A first invention of the present application is a data transmitting device transmitting image data made up of one or more frames, the data transmitting device transmitting illumination control type information indicative of a control type of audio-visual environment illumination at the time of displaying the frames of the image data, the illumination control type information being added to the image data.

A second invention of the present application is the data transmitting device, wherein the illumination control type information is added for each frame of the image data.

A third invention of the present application is the data transmitting device, wherein the illumination control type information includes an instruction for control of switching the audio-visual environment illumination based on feature quantities of the frames of the image data.

A fourth invention of the present application is the data transmitting device, wherein the illumination control type information includes an instruction for control of maintaining the last audio-visual environment illumination regardless of feature quantities of the frames of the image data.

A fifth invention of the present application is the data transmitting device, wherein the illumination control type information includes an instruction for control of switching to the predefined audio-visual environment illumination determined in advance regardless of feature quantities of the frames of the image data.

A sixth invention of the present application is a data transmitting device transmitting illumination control type information indicative of a control type of audio-visual environment illumination at the time of displaying frames making up image data in response to an external request, the data transmitting device transmitting the illumination control type information along with the output start timing of the frames making up the image data.

A seventh invention of the present application is the data transmitting device, wherein the illumination control type information as defined in the sixth invention includes an instruction for control of switching the audio-visual environment illumination based on feature quantities of the frames of the image data.

An eighth invention of the present application is the data transmitting device, wherein the illumination control type information as defined in the sixth invention includes an instruction for control of switching to the predefined audio-visual environment illumination determined in advance regardless of feature quantities of the frames of the image data.

A ninth invention of the present application is an audio-visual environment control device comprising: a receiving means that receives image data to be displayed on a display device and illumination control type information indicative of a control type of audio-visual environment illumination at the time of displaying frames making up the image data; and a controlling means that controls illumination light of an illuminating device disposed around the display device with the use of feature quantities of the image data and the illumination control type information.

A tenth invention of the present application is the audio-visual environment control device, wherein the controlling means performs control of switching the illumination light of the illuminating device based on feature quantities of the frames of the image data according to the illumination control type information.

An eleventh invention of the present application is the audio-visual environment control device, wherein the controlling means performs control of maintaining the illumination light of the illuminating device regardless of feature quantities of the frames of the image data according to the illumination control type information.

A twelfth invention of the present application is the audio-visual environment control device, wherein the controlling means performs control the illumination light of the illuminating device to a predefined state determined in advance regardless of feature quantities of the frames of the image data according to the illumination control type information.

A thirteenth invention of the present application is an audio-visual environment control system comprising the audio-visual environment control device and an illuminating device having audio-visual environment illumination light controlled by the audio-visual environment control device.

A fourteenth invention of the present application is a data transmitting method of transmitting image data made up of one or more frames comprising: transmitting illumination control type information indicative of a control type of audio-visual environment illumination at the time of displaying the frames of the image data, wherein the illumination control type information is added to the image data.

A fifteenth invention of the present application is a data transmitting method of transmitting illumination control type information indicative of a control type of audio-visual environment illumination at the time of displaying frames making up image data in response to an external request comprising: transmitting the illumination control type information along with the output start timing of the frames making up the image data.

A sixteenth invention of the present application is an audio-visual environment control method comprising: receiving image data to be displayed on a display device and illumination control type information indicative of a control type of audio-visual environment illumination at the time of displaying frames making up the image data; and controlling illumination light of an illuminating device disposed around the display device with the use of feature quantities of the image data and the illumination control type information.

### EFFECT OF THE INVENTION

According to the present invention, illumination light of an audio-visual environment may appropriately be controlled adaptively to the atmosphere and the situation setting of a shot scene intended by video producers and the advanced image effects may be acquired by giving a feeling of being at a live performance to viewers.

### BRIEF DESCRIPTION OF DRAWINGS

[Fig. 1] Fig. 1 is a view for explaining an example of the problem of the illumination variation of the conventional technology.
[Fig. 2] Fig. 2 is a view for explaining another example of the problem of the illumination variation of the conventional technology.
[Fig. 3] Fig. 3 is a view for explaining another example of the problem of the illumination variation of the conventional technology.
[Fig. 4] Fig. 4 is a view for explaining another example of the problem of the illumination variation of the conventional technology.
[Fig. 5] Fig. 5 is a block diagram of a schematic configuration of the essential parts of an image transmitting apparatus in an audio-visual environment control system according to a first embodiment of the present invention.
[Fig. 6] Fig. 6 is a view for explaining a layer configuration of encoded data of a moving image encoded in MPEG.
[Fig. 7] Fig. 7 is an explanatory view of illumination control type information in the audio-visual environment control system according to the first embodiment of the present invention.
[Fig. 8] Fig. 8 is a view of a portion of image data including a scene change.
[Fig. 9] Fig. 9 is a view for explaining components of image.
[Fig. 10] Fig. 10 is a block diagram of a schematic configuration of the essential parts of an image receiving apparatus in the audio-visual environment control system according to the first embodiment of the present invention.
[Fig. 11] Fig. 11 is a flowchart of operations of an illumination control data generating portion in the audio-visual environment control system according to the first embodiment of the present invention.
[Fig. 12] Fig. 12 is a block diagram of a schematic configuration of the essential parts of an external server in an audio-visual environment control system according to a second embodiment of the present invention.
[Fig. 13] Fig. 13 is an explanatory view of an example of an illumination control type information storage table in the audio-visual environment control system according to the second embodiment of the present invention.
[Fig. 14] Fig. 14 is a block diagram of a schematic configuration of the essential parts of an image receiving apparatus in the audio-visual environment control system according to the second embodiment of the present invention.

### EXPLANATIONS OF REFERENCE NUMERALS

1...data multiplexing portion; 2...transmitting portion; 10...image transmitting apparatus; 30, 60...image receiving apparatus; 31, 61...receiving portion; 32, 62...data separating portion; 33, 34...delay generating portion; 35, 65...illumination control data generating portion; 36...image display device; 37...audio reproducing device; 38...illuminating device; 50...external server (data transmitting device); 51...receiving portion; 52...data storage portion; 53...transmitting portion; 66...CPU; 67...transmitting portion; and 68...receiving portion.

### PREFERRED EMBODIMENTS OF THE INVENTION

### <First Embodiment>

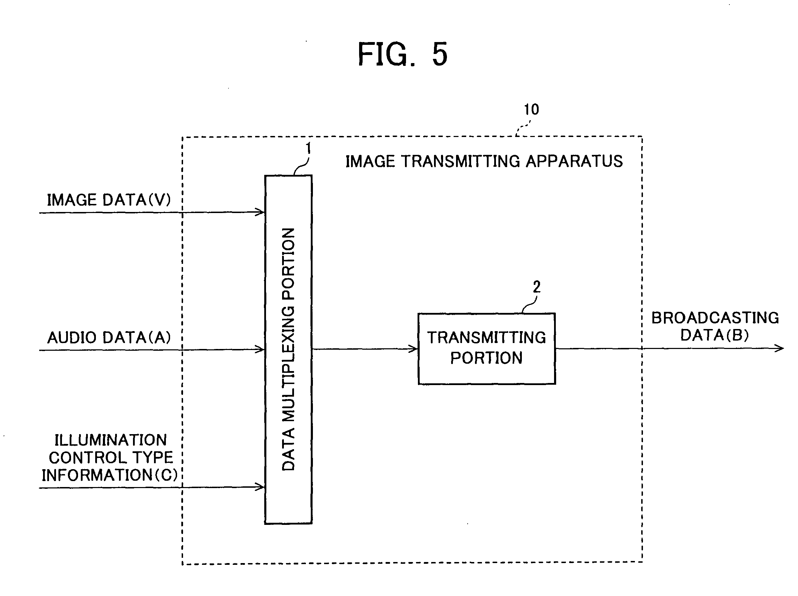

A first embodiment of an audio-visual environment control system of the present invention will now be described in detail with reference to Figs. 5 to 11.
As shown in Fig. 5, an image transmitting apparatus (data transmitting device) 10 of this embodiment includes a data multiplexing portion 1 that multiplexes image data (V), audio data (A), and illumination control type information (C) supplied as additional data, and a transmitting portion 2 that modulates and sends out to a transmission channel the output data of the data multiplexing portion 1 as broadcasting data (B) after adding the error-correcting codes, etc. The illumination control type information (C) is indicative of the control types of audio-visual environment illumination when displaying frames making up the image data and is assumed to be indicative of the control types of whether the audio-visual environment illumination is controlled for the switching depending on image feature quantities of the frames, whether the last audio-visual environment lighting is controlled to be maintained regardless of image feature quantities of the frames, or whether the audio-visual environment illumination is controlled for the switching to predefined illumination determined in advance regardless of image feature quantities of the frames in this case.

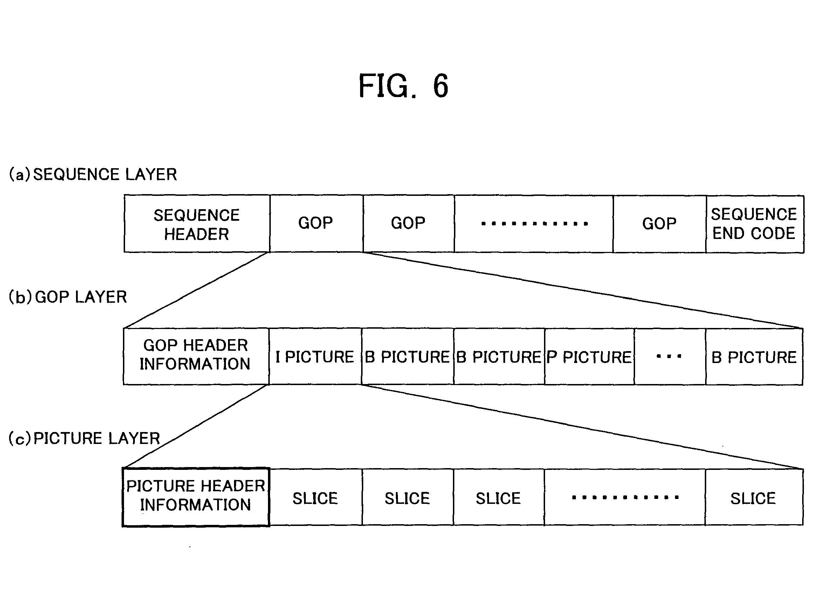

Fig. 6 is an explanatory view of a partial schematic of a layered configuration of moving-image encoded data prescribed in the MPEG2 (Moving Picture Experts Group 2)-Systems. The encoded data of a sequence consisting of a plurality of consecutive pictures have a layered configuration of six layers, which are (a) a sequence layer, (b) a GOP (Group Of Pictures) layer, (c) a picture layer, a slice layer, a macro block layer (not shown), and a block layer (not shown), and the data of the picture layer (c) have picture header information at the forefront, followed by the data (slices) of a plurality of the slice layers.

The picture header information region of the picture layer (c) is provided with a picture header region (picture header) having descriptions of various pieces of predetermined information such as a picture type and a scale of the entire frame as well as a user data (extensions and user data) region capable of having descriptions of arbitrary additional information, and the illumination control type information is written on this user data region in this embodiment. The illumination control type information corresponding to a frame is written as low-order two bits of eight bits defined as user data of the frame.

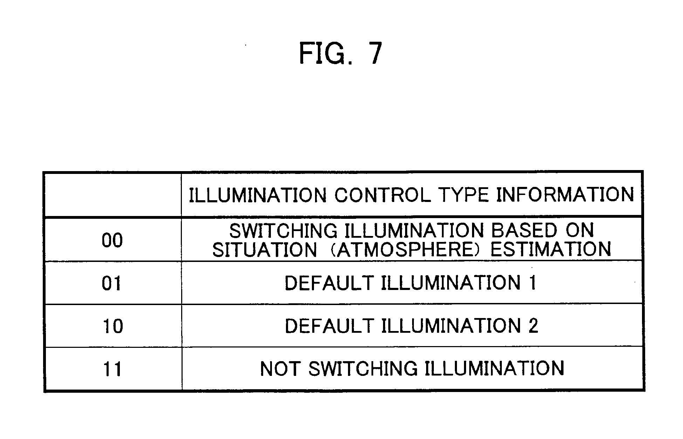

For example, as shown in Fig. 7, "00000000" denotes user data added when it is instructed to estimate the situation (atmosphere) of a shot scene from an image feature quantity of the frame to perform control for switching audio-visual environment illumination; "00000001" denotes user data added when it is instructed to perform control for switching to predetermined audio-visual environment illumination having first brightness and color (default illumination 1) regardless of an image feature quantity of the frame; "00000010" denotes user data added when it is instructed to perform control for switching to predetermined audio-visual environment illumination having second brightness and color (default illumination 2) regardless of an image feature quantity of the frame; and "00000011" denotes user data added when it is instructed to perform control for maintaining the last audio-visual environment illumination (not switching the illumination) regardless of an image feature quantity of the frame. It is assumed here that the default illumination 1 and the default illumination 2 are set to bright white illumination and dark white illumination, respectively.

It is needless to say that the illumination control type information may be written on the user data region of the above picture layer (c) when the image data are encoded in a predetermined mode. Although low-order two bits of eight bits allocated to user data are utilized for writing four types of the illumination control type in the above example (therefore, high-order six bits of user data are represented by "0"), this is not a limitation of the present invention. In the present invention, any information capable of identifying the control types of the audio-visual environment illumination at the time of displaying frames may be added to the image data or the audio data, and a data structure in this regard is not limited to the above description. For example, the illumination control type information may be added to and transferred with an extension header of a transport stream packet (TSP) prescribed in the MPEG2-Systems. The illumination control type information is not limited to the above information and may be any information of one or more bits representative of at least whether the illumination is controlled based on an image feature quantity of the frame, and eight or more types of the illumination control type may be represented by three or more bits.

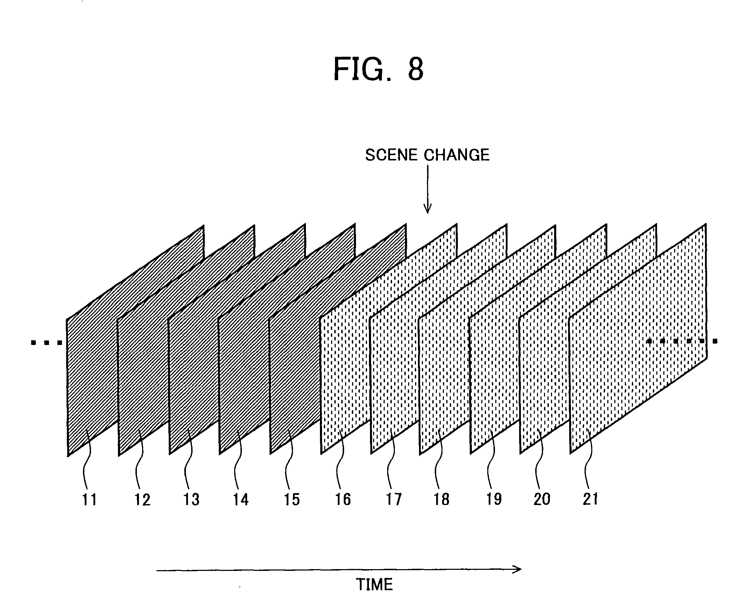

Although the above illumination control type information may be arbitrarily added on the transmission side, the information may be generated based on the scenario (script) at the time of the image shooting. For example, as shown in Fig. 8, a first frame 16 of an image shooting scene (first frame after a scene change) is given the user data "00000000" instructive of estimating the situation (atmosphere) of a shot scene from an image feature quantity of the frame to perform control for switching the audio-visual environment illumination, and other frames 17 to 21 included in the same scene are given the user data "00000011" instructive of performing control for maintaining the last audio-visual environment illumination (not switching the illumination) regardless of an image feature quantity of the frame to suitably perform the switching control of the audio-visual environment illumination described later in accordance with scene changing points reflecting the intention of image producers.

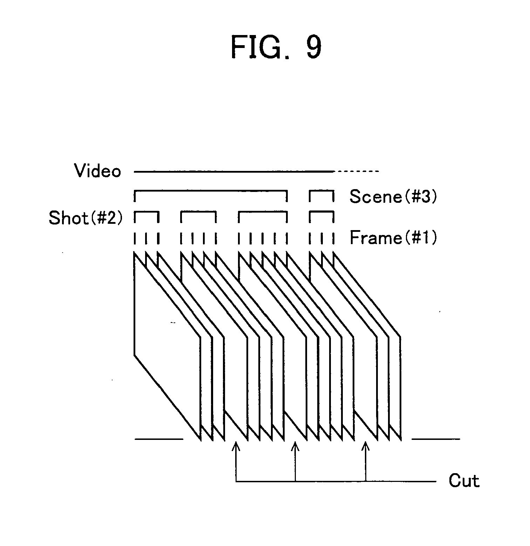

A configuration of image including scenes and shots will then be described with reference to Fig. 9. Image data making up a sequence of continuous moving images may be divided and considered as three-layered configuration as shown in Fig. 9. A first layer (#1) making up image (video) is a frame. The frame is a physical layer and indicates a single two-dimensional image. The frame is normally acquired at a rate of 30 frames per second. A second layer (#2) is a shot. The shot is a frame sequence shot by a single camera. A third layer (#3) is a scene. The scene is a shot sequence having story continuity.

The illumination control type information may be added to each frame of image data as above, and when the frames are displayed, the audio-visual environment illumination may be switched at any timing and may suitably be controlled as described later depending on the intention of image producers (such as a scenario writer and a director).

An image receiving apparatus (data receiving device) will then be described that receives the broadcasting data sent out from the image transmitting apparatus to display/reproduce image/audio while controlling the audio-visual environment illumination.

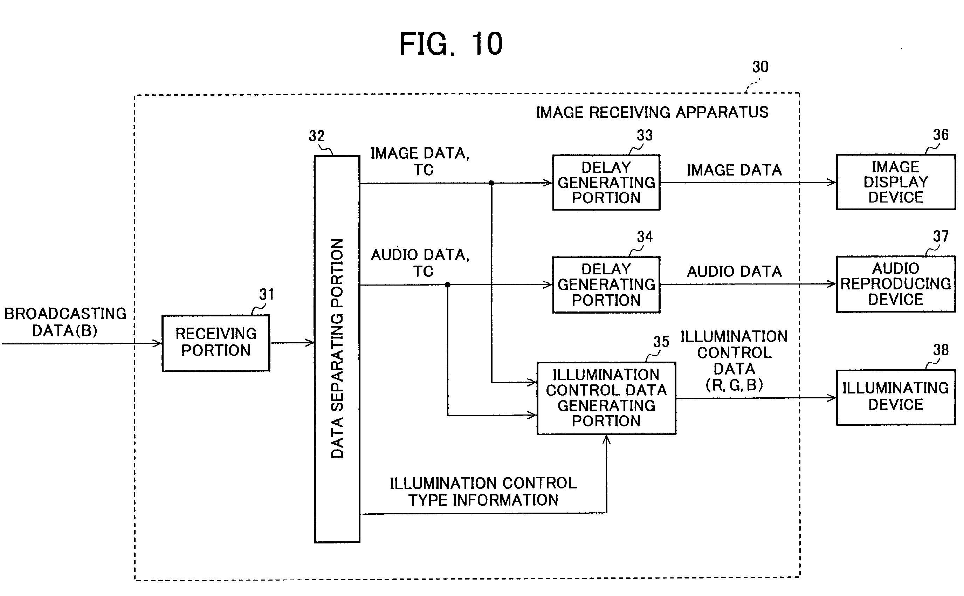

As shown in Fig. 10, the image receiving apparatus of this embodiment includes a receiving portion 31 that receives and demodulates the broadcasting data (B) input from the transmission channel while performing error correction; a data separating portion 32 that separates/extracts the image data and TC (time code) output to an image display device 36, the audio data and TC (time code) output to an audio reproducing device 37, and the illumination control type information as additional information from the output data of the receiving portion 31; an illumination control data generating portion 35 that generates the suitable illumination control data (RGB data) at the time of display of the frames based on the illumination control type information separated by the data separating portion 32 and the feature quantities of the image data and the audio data to output the data to an illuminating device 38 illuminating the audio-visual environment space; and delay generating portions 33, 34 that delay and output the image data and the audio data by the processing time in the illumination control data generating portion 35.

The illuminating device 38 may be disposed around the image display device 36 and be made up of LEDs that emit lights of three primary colors, for example, RGB having predetermined hues. However, the illuminating device 38 may have any configuration as long as the illumination color and brightness of the surrounding environment of the image display device 36 may be controlled, is not limited to the combination of LEDs emitting predetermined colors as above, and may be made up of white LEDs and color filters, or a combination of white lamps or fluorescent tubes and color filters, color lamps, etc., may also be applied. One or a plurality of the illuminating devices 38 may be disposed.

The time code (TC) is information added to indicate reproduction time information of each of the image data and the audio data and is made up of information indicative of hours (h) :minutes (m) :seconds (s) :frames (f) of the image data, for example.

The illumination control data generating portion 35 of this embodiment generates the suitable illumination control data (RGB data) at the time of display of the frames depending on the illumination control types specified by the illumination control type information.

There is, if the illumination control type information instructs to perform control for switching the audio-visual environment illumination based on the image feature quantities/audio feature quantities of the frames, the illumination condition and the situation setting (atmosphere) are estimated for the shooting location based on the image data and the audio data of the frames, and the illumination control data are output to control the illuminating device 38 based on the estimation result.

Various technologies including known technologies can be used for the method of estimating the surrounding light state at the time of shooting with the illumination control data generating portion 35. Although the feature quantity of the audio data is used along with the feature quantity of the image data to estimate the situation (atmosphere) here, this is for the purpose of improving the estimation accuracy of the situation (atmosphere) and the situation (atmosphere) of the shot scene may be estimated only from the feature quantity of the image data.

For the feature quantity of the image data, for example, the color signals and the luminance signals in a predetermined area of a screen can directly be used as in the case of the above conventional examples, or the color temperature of the surrounding light at the time of the image shooting may be obtained and used from these signals. The signals and the temperature may be configured to be switched and output as the feature quantity of the image data. Sound volume, audio frequencies, etc., may be used for the feature quantity of the audio data.

This enables the illumination control data generating portion 35 to estimate the situation (atmosphere), i.e., the surrounding light state at the time of the image shooting based on the feature quantities of the image data and the audio data and the switching to the illumination light based on the situation (atmosphere) estimation may be performed at the timing specified by the illumination control type information to emit the light to the audio-visual environment space.

The illumination control data generating portion 35 has the illumination control data corresponding to one or more illumination lights having predetermined brightness and color stored in a storage portion (not shown). If the illumination control type information instructs to perform control for switching to the predefined audio-visual environment illumination determined in advance regardless of the image feature quantities/audio feature quantities of the frames, the corresponding illumination control data are read and output from the storage portion without performing the above estimation processing for the situation (atmosphere) at the time of the image shooting.

The illumination control data generating portion 35 has two types of illumination control data prepared correspondingly to the default illumination 1 (bright white illumination) and the default illumination 2 (dark white illumination), outputs the illumination control data corresponding to the default illumination 1 if the illumination control type information instructs to perform control for switching the audio-visual environment illumination to the default illumination 1, and outputs the illumination control data corresponding to the default illumination 2 if the illumination control type information instructs to perform control for switching the audio-visual environment illumination to the default illumination 2.

Therefore, the switching to the predefined illumination light determined in advance may be performed at the timing specified by the illumination control type information to emit the light to the audio-visual environment space regardless of the feature quantities of the image data and the audio data.

If the illumination control type information instructs to perform control for maintaining the last audio-visual environment illumination (not switching the illumination) regardless of the image feature quantities/audio feature quantities of the frames, the illumination control data output for the last frame are repeatedly output without performing the above estimation processing for the situation (atmosphere) at the time of the image shooting.

Therefore, the audio-visual environment illumination light may be retained in the same state for an arbitrary period regardless of the feature quantities of the image data and the audio data. For example, substantially the same audio-visual environment illumination light may be retained within the same scene without a change in the situation (atmosphere), i.e., the illumination state at the time of the image shooting. For a period while the control of the audio-visual environment illumination based on the image feature quantity/audio feature quantity is inappropriate unpleasant constant white illumination light may be retained and applied, for example. Therefore, viewers may be prevented from feeling unpleasant due to inappropriate audio-visual environment illumination to implement the optimum audio-visual environment.

On the other hand, since the image data and the audio data output to the image display device 36 and the audio reproducing device 37 are delayed by the delay generating portions 33, 34 for a time required for the above situation (atmosphere) estimation processing with the image data and the audio data, the illumination control data output from the image receiving apparatus to the illuminating device 38 are synchronized with the image data and the audio data output to the image display device 36 and the audio reproducing device 37, and the illumination light of the illuminating device 38 can be switched at the timing synchronized with the image display.

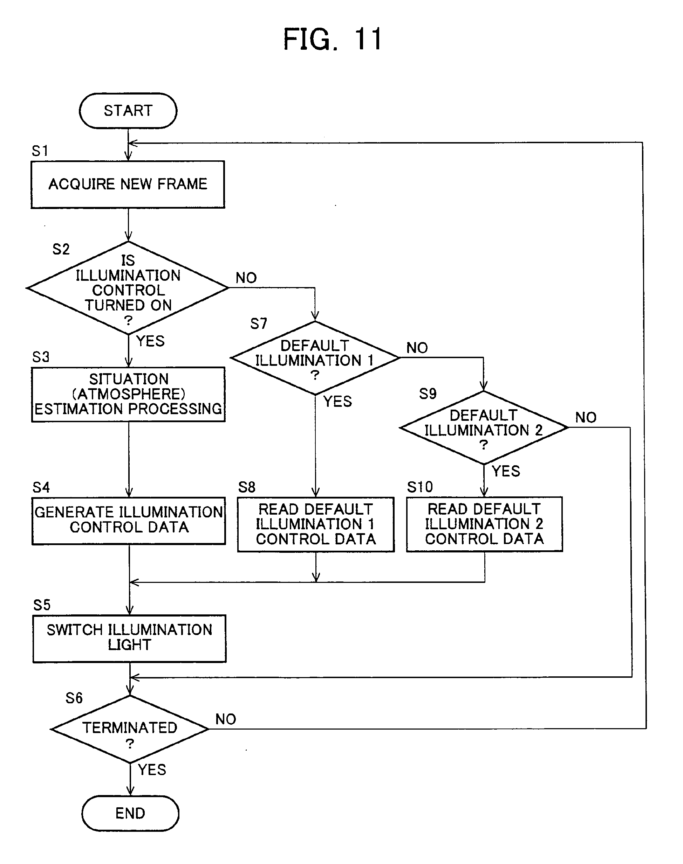

A flow of the processing in the illumination control data generating portion 35 will then be described with reference to a flowchart of Fig. 11. First, a new frame is acquired from the input image data (step S1) and it is determined based on the illumination control type information whether the control is performed to switch the audio-visual environment illumination based on the feature quantities of the image data/audio data of the acquired frame (step S2).

If the control is performed to switch the audio-visual environment illumination based on the feature quantities of the image data/audio data of the acquired frame, the situation (atmosphere) estimation processing is executed by detecting the image feature quantity/audio feature quantity using the image data/audio data of the frame (step S3), and the illumination control data are generated for controlling the illuminating device 38 based on the estimation processing result (step S4). The illuminating device 38 performs the control for switching the illumination light based on the illumination control data (step S5), and it is subsequently determined whether the processing is terminated (step S6). If the image data further continue, the processing returns to step S1 to acquire a new frame.

If it is determined at above step S2 that the control is not performed for switching the audio-visual environment illumination based on the feature quantities of the image data/audio data of the acquired frame, it is determined based on the illumination control type information whether the control is performed for switching the audio-visual environment illumination to the default illumination 1 (step S7). If the control is performed for switching the audio-visual environment illumination to the default illumination 1 regardless of the image feature quantity/audio feature quantity of the acquired frame, the illumination control data prepared correspondingly to the default illumination 1 are read (step S8), and the illuminating device 38 performs the control for switching the illumination light based on the illumination control data (step S5). It is subsequently determined whether the processing is terminated (step S6), and if the image data further continue, the processing returns to step S1 to acquire a new frame.

If it is determined at above step S7 that the control is not performed for switching the audio-visual environment illumination to the default illumination 1, it is determined based on the illumination control type information whether the control is performed for switching the audio-visual environment illumination to the default illumination 2 (step S9). If the control is performed for switching the audio-visual environment illumination to the default illumination 2 regardless of the image feature quantity/audio feature quantity of the acquired frame, the illumination control data prepared correspondingly to the default illumination 2 are read (step S10), and the illuminating device 38 performs control for switching the illumination light based on the illumination control data (step S5). It is subsequently determined whether the processing is terminated (step S6), and if the image data further continue, the processing returns to step S1 to acquire a new frame.

If it is determined at above step S9 that the control is not performed for switching the audio-visual environment illumination to the default illumination 2, since the control is performed to maintain the last audio-visual environment illumination regardless of the image feature quantity/audio feature quantity of the acquired frame, it is determined whether the processing is terminated (step S6) without performing the switching control of the illumination light, and if the image data further continue, the processing returns to step S1 to acquire a new frame.

Since the audio-visual environment illumination is configured to be controlled based on the illumination control type information added to the image data in this embodiment, the switching control of the audio-visual environment illumination can be performed at any timing corresponding to the intention of image producers. For example, when displaying the image scenes shown in Figs. 1 and 2, the audio-visual environment illumination corresponding to the image feature quantity/audio feature quantity of the scene start frame may be maintained until the scene ends. That is, since the brightness and color of the audio-visual environment illumination light may be retained substantially constant in the same scene, the feeling of being at a live performance and the atmosphere may be prevented from deteriorating due to sharp fluctuations of the audio-visual environment illumination in the same scene and the appropriate audio-visual environment may always be implemented.

In this embodiment, the switching control may appropriately be performed between the audio-visual environment illumination corresponding to the feature quantities of the image/audio data and the predefined audio-visual environment illumination determined in advance to implement the optimum illumination control in the audio-visual environment. For example, when displaying the opening (synopsis) of the drama program shown in Fig. 3, since the audio-visual environment illumination may be put into the constant white illumination state set by default regardless of the image feature quantity/audio feature quantity of the frames, viewers may be prevented from feeling unpleasant due to sharp fluctuations of the audio-visual environment illumination light in a short period of time and the appropriate audio-visual environment may be implemented.

For example, when displaying the image having a short-time shot inserted between scenes shown in Fig. 4, since the audio-visual environment illumination for the last scene may be maintained without change or the audio-visual environment illumination may be put into the constant white illumination state set by default regardless of the image feature quantity/audio feature quantity of the frames making up this shot, viewers may be prevented from feeling unpleasant due to sharp fluctuations of the audio-visual environment illumination light in a short period of time and the appropriate audio-visual environment may be implemented.

In this embodiment, since the illumination control type information also related to delimitation positions of the set situations in the story of scenes is transmitted and received, various functions other than the control of the audio-visual environment illumination may be implemented such as searching and editing desired scenes with the use of the illumination control type information.

Although the case of transmitting the illumination control type information added to the broadcasting data has been described in the first embodiment of the present invention, if the illumination control type information is not added to the broadcasting data, the optimum audio-visual environment at the time of reproducing image may be implemented by transmitting and receiving the illumination control type information corresponding to the image data to be displayed with an external server, etc. This will hereinafter be described as a second embodiment of the present invention.

### <Second Embodiment>

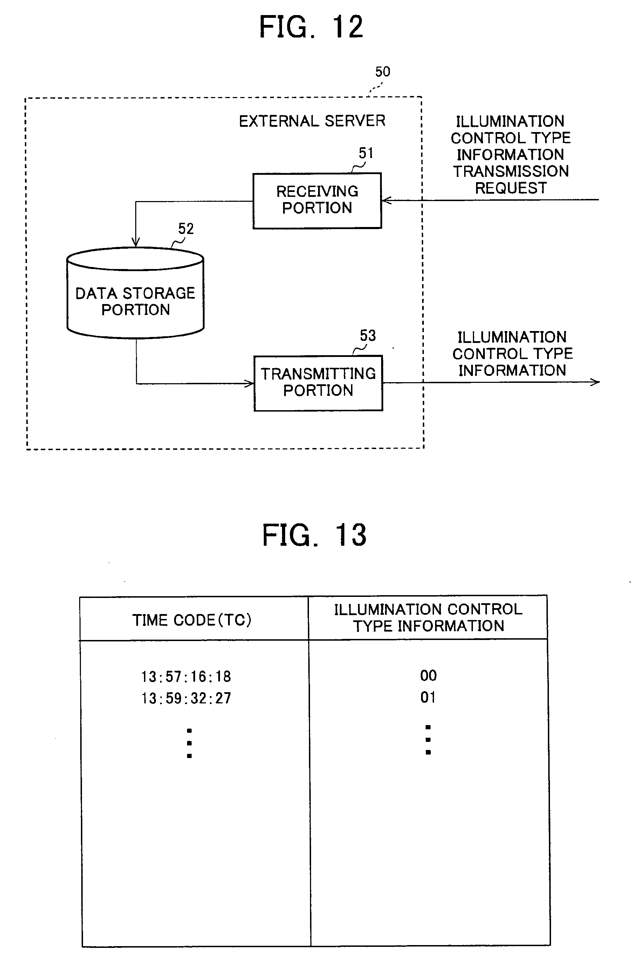

The second embodiment of the audio-visual environment control system of the present invention will hereinafter be described in detail with reference to Figs. 12 to 14 and the same portions as the first embodiment are given the same reference numerals and will not be described.
As shown in Fig. 12, an external server (data transmitting device) 50 of this embodiment includes a receiving portion 51 that receives a transmission request for the illumination control type information related to certain image data (contents) from the image receiving apparatus (data receiving device), a data storage portion 52 that has stored thereon the illumination control type information for each piece of image data (contents), and a transmitting portion 53 that transmits the illumination control type information requested for transmission to the requesting image receiving apparatus (data receiving device).

As shown in Fig. 13, the illumination control type information stored in the data storage portion 52 of the present embodiment is written in a table format and correlated with the output start timing (also referred to as reproduction start timing and, hereinafter, simply the start timing) of the image frames to the image display device 36, and the illumination control type information of image data (program contents) requested for transmission is transmitted by the transmitting portion 53 to the requesting image receiving apparatus along with the start TC (time code) of frames making up the image data.

Although four types (two bits) of the illumination control type shown in Fig. 7 is also assumed to be used in this embodiment, the illumination control type is written on an illumination control type information storage table only for frames with the illumination switch control based on the situation (atmosphere) estimation and the frames with the switching control to the default illumination 1 and 2, and the illumination control type is not written for the frames with the illumination switch prohibited. That is, when displaying the frames having no particular description on the illumination control type information storage table, the last audio-visual environment illumination is maintained and this considerably reduces the data amount of the illumination control type information.

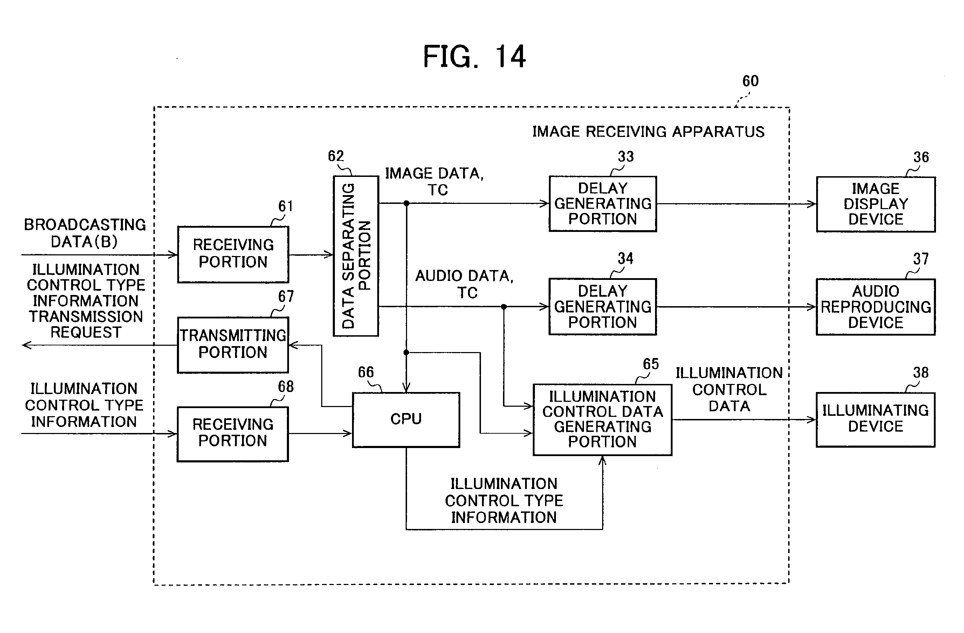

An image receiving apparatus (data receiving device) 60 will then be described that receives the illumination control type information sent out from the external server 50 to control the audio-visual environment illumination. As shown in Fig. 14, the image receiving apparatus 60 of this embodiment includes a receiving portion 61 that receives and demodulates the broadcasting data (B) input from the transmission channel while performing error correction; a data separating portion 62 that separates/extracts the image data output to the image display device 36 and the audio data output to the audio reproducing device 37 from the output data of the receiving portion 61; a transmitting portion 67 that sends out the transmission request for the illumination control type information corresponding to the image data (contents) to be displayed to the external server (data transmitting device) through a communication network; and a receiving portion 68 that receives the illumination control type information requested for transmission from the external server through the communication network.

The image receiving apparatus also includes a CPU 66 that temporarily stores the illumination control type information received by the receiving portion 68 to compare the frame start TC (time code) correlated with the illumination control type information with the TC (time code) of the image data extracted by the data separating portion 62 and that outputs information indicative of the correlated illumination control type information if the time codes are identical, and an illumination control data generating portion 65 that generates and outputs the illumination control data (RGB data) based on the illumination control type information from the CPU 66 and the feature quantities of the image data and the audio data to the illuminating device 38 illuminating the audio-visual environment space.

This is, the CPU 66 compares the frame start time code on the illumination control type information storage table received from the external server and stored thereon with the time code of the image data input to the illumination control data generating portion 65, and when these time codes are identical, the CPU 66 outputs the illumination control type information correlated with the frame (time code) to the illumination control data generating portion 65.

The illumination control data generating portion 65 of this embodiment generates the suitable illumination control data (RGB data) at the time of display of the frames depending on the illumination control type information as is the case with the illumination control data generating portion 35 of the first embodiment.

If the illumination control type information instructs to perform control for switching the audio-visual environment illumination based on the image feature quantities/audio feature quantities of the frames, the illumination condition and the situation setting (atmosphere) for the shooting location are estimated based on the image data and the audio data of the frames, and the illumination control data are output to control the illuminating device 38 based on the estimation result.

If the illumination control type information instructs to perform control for switching to the predefined audio-visual environment illumination determined in advance regardless of the image feature quantities/audio feature quantities of the frames, the illumination control data prepared internally in advance are read and output without performing the above estimation processing for the situation (atmosphere) at the time of the image shooting.

Otherwise, it is assumed that an instruction is given to perform control for maintaining the last audio-visual environment illumination (not changing the illumination) regardless of the image feature quantities/audio feature quantities of the frames, and the illumination control data output for the last frame are repeatedly output without performing the above estimation processing for the situation (atmosphere) at the time of the image shooting.

Since the illumination control type information corresponding to the display image data (program contents) is obtained from the external server even when the illumination control type information is not added to the broadcasting data and the audio-visual environment illumination is controlled based on this illumination control type information in this configuration, the switching control of the audio-visual environment illumination can be performed at any timing depending on the intention of image producers, and the switching control may appropriately be performed between the audio-visual environment illumination corresponding to the feature quantity of the image data and the predefined audio-visual environment illumination determined in advance to implement the optimum illumination control in the audio-visual environment, as is the case with the above first embodiment.

In this embodiment, since the illumination control type information also related to delimitation positions of the set situations in the story of scenes is transmitted and received, various functions other than the control of the audio-visual environment illumination may be implemented such as searching and editing desired scenes with the use of the illumination control type information.

The audio-visual environment control device, the method, and the audio-visual environment control system of the present invention may be implemented in various embodiments without departing from the gist of the present invention. For example, the environment illumination control device may be disposed within the image display device and may obviously be configured such that the external illuminating devices may be controlled based on various pieces of information included in the input image data.

The above illumination control type information is not limited to be separated/acquired from the broadcasting data or acquired from the external server and, for example, if the image information reproduced by external devices (such as DVD players and Blu-ray disc players) is displayed, the illumination control type information added to a medium may be read and used.

## Claims

1. A data transmitting device transmitting image data made up of one or more frames,
the data transmitting device transmitting illumination control type information indicative of a control type of audio-visual environment illumination at the time of displaying the frames of the image data, the illumination control type information being added to the image data.

2. The data transmitting device as defined in claim 1, wherein the illumination control type information is added for each frame of the image data.

3. The data transmitting device as defined in claim 1, wherein the illumination control type information includes an instruction for control of switching the audio-visual environment illumination based on feature quantities of the frames of the image data.

4. The data transmitting device as defined in claim 1, wherein the illumination control type information includes an instruction for control of maintaining the last audio-visual environment illumination regardless of feature quantities of the frames of the image data.

5. The data transmitting device as defined in claim 1, wherein the illumination control type information includes an instruction for control of switching to the predefined audio-visual environment illumination determined in advance regardless of feature quantities of the frames of the image data.

6. A data transmitting device transmitting illumination control type information indicative of a control type of audio-visual environment illumination at the time of displaying frames making up image data in response to an external request,
the data transmitting device transmitting the illumination control type information along with the output start timing of the frames making up the image data.

7. The data transmitting device as defined in claim 6, wherein the illumination control type information includes an instruction for control of switching the audio-visual environment illumination based on feature quantities of the frames of the image data.

8. The data transmitting device as defined in claim 6, wherein the illumination control type information includes an instruction for control of switching to the predefined audio-visual environment illumination determined in advance regardless of feature quantities of the frames of the image data.

9. An audio-visual environment control device comprising:
a receiving means that receives image data to be displayed on a display device and illumination control type information indicative of a control type of audio-visual environment illumination at the time of displaying frames making up the image data; and
a controlling means that controls illumination light of an illuminating device disposed around the display device with the use of feature quantities of the image data and the illumination control type information.

10. The audio-visual environment control device as defined in claim 9, wherein the controlling means performs control of switching the illumination light of the illuminating device based on feature quantities of the frames of the image data according to the illumination control type information.

11. The audio-visual environment control device as defined in claim 9, wherein the controlling means performs control of maintaining the illumination light of the illuminating device regardless of feature quantities of the frames of the image data according to the illumination control type information.

12. The audio-visual environment control device as defined in claim 9, wherein the controlling means performs control the illumination light of the illuminating device to a predefined state determined in advance regardless of feature quantities of the frames of the image data according to the illumination control type information.

13. An audio-visual environment control system comprising the audio-visual environment control device as defined in any one of claims 9 to 12 and an illuminating device having audio-visual environment illumination light controlled by the audio-visual environment control device.

14. A data transmitting method of transmitting image data made up of one or more frames comprising:
transmitting illumination control type information indicative of a control type of audio-visual environment illumination at the time of displaying the frames of the image data, wherein the illumination control type information is added to the image data.

15. A data transmitting method of transmitting illumination control type information indicative of a control type of audio-visual environment illumination at the time of displaying frames making up image data in response to an external request comprising:
transmitting the illumination control type information along with the output start timing of the frames making up the image data.

16. An audio-visual environment control method comprising:
receiving image data to be displayed on a display device and illumination control type information indicative of a control type of audio-visual environment illumination at the time of displaying frames making up the image data; and
controlling illumination light of an illuminating device disposed around the display device with the use of feature quantities of the image data and the illumination control type information.
